# EUROPEAN PATENT APPLICATION

(11) **EP 3 231 609 A1**
(43) Date of publication of application: **18.10.2017**
(21) Application number: 15866750.1
(22) Date of filing: 21.07.2015
(51) Int. Cl.: B32B 27/28, B32B 33/00, B32B 37/15

(54) **PRE-COATED FILM AND MANUFACTURING METHOD THEREFOR**

(30) Priority: 09.12.2014 CN 201410747434; 09.12.2014 CN 201420769387 U
(71) Applicant: Kangdexin Composite Material Group Co., Ltd., Suzhou, Jiangsu 215634 (CN)
(72) Inventor: ZHONG, Yu, Suzhou, Jiangsu 215634 (CN); XU, Wenxiao, Suzhou, Jiangsu 215634 (CN); ZHANG, Tao, Suzhou, Jiangsu 215634 (CN)
(74) Representative: Lux, Berthold
(86) International application number: PCT/CN2015/084677
(87) International publication number: WO 2016/090919

(57) **Abstract**

Disclosed are a pre-coated film and a manufacturing method therefor. The pre-coated film sequentially comprises: a printed or coated layer, an enhanced aluminum-coated resin layer, a molded resin layer, a film layer, a base coated layer, and a thermally melt adhesive layer. A glittering pattern having pyramid nicks and an anti-counterfeiting encryption pattern having a laser holographic effect and grating nicks are provided on the molded resin layer. The pyramid nicks are shaped like a quadrilateral pyramid, a hexagonal pyramid or quadrilateral and hexagonal pyramid mixed nicks. The depth of each pyramid nick is 10 µm to 20 µm, and the depth of the grating nick is less than 1 µm. The present invention is mainly characterized in that the pre-coated film has a granular glittering effect, has a metal simulation surface effect of a glittering point combined pattern designed by computer software, has an anti-counterfeiting function, and is an environmentally-friendly metal simulation packaging material, and is applied to coated films of multiple products such as stationery, clothes, furniture decoration, packages of luxuries and metal substitute sheets.

## Description

### FIELD

The present disclosure relates to a packaging technical field, more particularly, to a lamination film and a method for preparing the same.

### BACKGROUND

Development of a lamination film with an imitated metal effect, which is prepared by a combination of thermal molding and processes such as anti-counterfeiting, printing, polishing, coating and a hot melt adhesive process, is still needed. A film, commonly used, is prepared in a manner that a film printed with silver ink is prepared at a temperature of 160 °C to 180 °C on line in a film plant and a molded glittering film product is from upgrades and branch products of laser film industry.

Nowadays, a PVC glittering film is applied for shoes, bags and decorative boxes companies since technology integration capacity of a certain industry is limited and thus a large scale production has not been formed yet. So far, it is difficult for the glittering film to achieve a cross-industry packaging applications due to a single function.

### SUMMARY

An object of the present disclosure is to provide a lamination film and a method for preparing the same.

In a first aspect, the present disclosure provides in embodiments a lamination film, including a printed or coated color layer, an aluminum-coated layer, a reinforced aluminum-coated resin layer, a molded resin layer, a film layer, a base coat layer and a hot melt adhesive layer which are sequentially arranged, wherein the molded resin layer is provided with a first pattern formed with a plurality of pyramid-shaped notches and capable of glittering under lights and a second pattern formed with a plurality of grating-shaped notches and capable of anti-counterfeiting encryption with laser holography, the pyramid-shaped notch is in at least one of a rectangular shape and a hexagonal shape, a depth of the pyramid-shaped notch is 10 µm to 20 µm, a depth of the grating-shaped notch is below 1 µm.

In some embodiments of the present disclosure, the film layer is a casting polypropylene, polyvinyl chloride or polyester film layer, and a thickness of the film layer is 40 µm to 160 µm.

In some embodiments of the present disclosure, the hot melt adhesive layer comprises one or more of ethylene-vinyl acetate (EVA) copolymer, ethylene-methyl acrylate (EMA) copolymer and ethylene-acrylic acid (EAA) copolymer.

In some embodiments of the present disclosure, the base coat layer is made from an aqueous solution of polyethyleneimine, ethylene-acrylic acid copolymer or polymer polyester, and has a dry weight of 0.07 g/m² and a thickness of 0.02 µm to 0.04 µm.

In some embodiments of the present disclosure, the printed or coated color layer has a dry weight of 0.02 g/m² to 0.07 g/m² and a solid content of 0.7% to 5.5%.

In a second aspect, the present disclosure provides in embodiments a method for preparing a lamination film is provided, comprising:
S 1: applying a resin layer on a first surface of a film layer;
S2: mould pressing, by a heat moulding process at 95 °C to 110 °C, a first pattern and a second pattern at the same time with two separate plate rollers, wherein the first pattern is formed with a plurality of pyramid-shaped notches and capable of glittering under lights, and the second pattern is formed with a plurality of grating-shaped notches and capable of anti-counterfeiting encryption with laser holography, the pyramid-shaped notch is in at least one of a rectangular shape and a hexagonal shape, a depth of the pyramid-shaped notch is 10 µm to 20 µm, and a depth of the grating-shaped notch is below 1 µm;
S3: coating a reinforced aluminum-coated resin layer on a molded resin layer obtained in S2 and then coating an aluminum-coated layer on the reinforced aluminum-coated resin layer;
S4: printing transparent color ink on the aluminum-coated layer by an intaglio press to form a printed or coated color layer;
S5: applying a base coat layer on a second surface of the film layer; and
S6: extruding a hot melt adhesive layer on the base coat layer to obtain the lamination film.

In some embodiments of the present disclosure, the reinforced aluminum-coated resin layer comprises an acrylic acid resin.

In some embodiments of the present disclosure, the hot melt adhesive layer having a thickness of 10 µm to 50 µm is formed on the base coat layer by a composite-extruder machine, which further comprises: feeding hot melt pellets dried in advance, having a melt index MI of 15 g/10min (190 °C, 2.16 kg) and a melting point of 85 °C, into an extruder; extruding and casting under a melting temperature of 215 °C to 230 °C on the base coat layer; and combining the hot melt adhesive layer with the base coat layer by a cooling roller and a pressing roller to obtain the lamination film.

In some embodiments of the present disclosure, the method further includes a step of providing an anti-counterfeiting code in the molded resin layer,
wherein the anti-counterfeiting code is formed by heat moulding process, and
wherein the anti-counterfeiting code is manufactured in the first pattern and presented as a character with laser holography having a depth of 0.1 mm or less, thereby achieving laser holography.

In some embodiments of the present disclosure, the molded resin layer is further combined with a synthetic grating for anti-counterfeiting, wherein the synthetic grating is a 20×30 mm² transparent laser holographic grating plate and is used as a security key.

In some embodiments of the present disclosure, the film layer is a casting polypropylene, polyvinyl chloride or polyester film layer, and a thickness of the film layer is 40 µm to 160 µm.

In some embodiments of the present disclosure, the hot melt adhesive layer comprises one or more of ethylene-vinyl acetate (EVA) copolymer, ethylene-methyl acrylate (EMA) copolymer and ethylene-acrylic acid (EAA) copolymer.

In some embodiments of the present disclosure, the base coat layer is made from an aqueous solution of polyethyleneimine, ethylene-acrylic acid copolymer or polymer polyester, and has a dry weight of 0.07 g/m² and a thickness of 0.02 µm to 0.04 µm.

In some embodiments of the present disclosure, the printed or coated color layer has a dry weight of 0.02 g/m² to 0.07 g/m² and a solid content of 0.7% to 5.5%.

According to embodiments of the present disclosure, the heat moulding process and laser holographic molding process are combined, such that the lamination film provided by the present method may present image and colour effects consistent with light reflection and the refraction effect of metal after treated by a surface mechanical process without stray light having optical holographic rainbow effect.

In the design of the molding plate roller, a first encryption is achieved by mould pressing a first pattern formed with a plurality of pyramid-shaped notches and capable of glittering under light, and a second encryption is achieved by mould pressing a second pattern formed with a plurality of grating-shaped notches and capable of anti-counterfeiting encryption with laser holographic effect.

There is no other additive in the production and processing process of the present disclosure, and thus the pollution is lower compared to traditional methods. In addition, since the lamination film contains a plurality of layers with much fewer pinholes, a better permeability resistance against corrosive medium, compared with traditional printing method, i.e., coating method, can be achieved. Moreover, a metal surface process of stainless steel plate or other metal plate used may be omitted, thus saving production cost.

The present disclosure is mainly characterized by a lamination film with a granular glittering effect and an imitated metal surface effect of a glittering spot combined pattern designed by computer software, as well as an anti-counterfeiting function. The lamination film is an environment-friendly imitation metal packaging material. The lamination film of the present disclosure can be applied to stationery, clothing, furniture decoration, luxury packaging and alternative film of metal sheet and other products, thus a wider range of the application is achieved.

### BRIEF DESCRIPTION OF THE DRAWINGS

Fig. 1 is a schematic view of a lamination film according to embodiments of the present disclosure;
Fig. 2 is a schematic view of pyramid-shaped notches and grating-shaped notches on a molded resin layer of a lamination film according to embodiments of the present disclosure;
Fig. 3 is a schematic view showing anti-counterfeiting principle of a lamination film according to embodiments of the present disclosure;
Fig. 4 is a schematic view showing principle of anti-counterfeiting pattern with a grating plate of a lamination film according to embodiments of the present disclosure;
Fig. 5 is a flow diagram of a method for preparing a lamination film according to embodiments of the present disclosure.

### DETAILED DESCRIPTION

Reference will be made in detail to embodiments of the present disclosure.

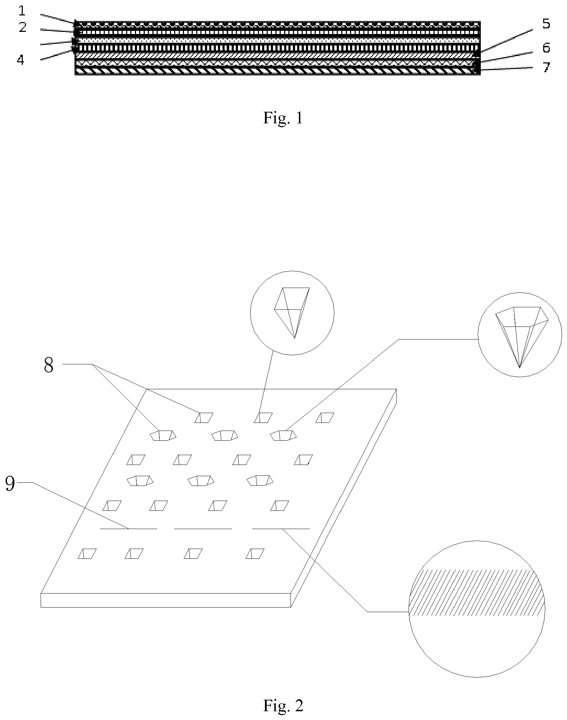

As shown in Fig. 1, a lamination film of the present disclosure includes a printed or coated color layer 1, an aluminum-coated layer 2, a reinforced aluminum-coated resin layer 3, a molded resin layer 4, a film layer 5, a base coat layer 6 and a hot melt adhesive layer 7 which are sequentially arranged.

The molded resin layer 4 is provided with a first pattern 8 formed with a plurality of pyramid-shaped notches and capable of glittering under lights and a second pattern 9 formed with a plurality of grating-shaped notches and capable of anti-counterfeiting encryption with laser holographic effect, the pyramid-shaped notch is in at least one of a rectangular shape and a hexagonal shape, a depth of the pyramid-shaped notch is 10 µm to 20 µm, a depth of the grating-shaped notch is below 1 µm. The glittering effect occurs due to optical refraction and reflection principles, which belongs to a particle application in the wave-particle duality of light. At the same time, the laser holographic anti-counterfeiting point is made by using the principle of optical interference, which belongs to a volatility application in the wave-particle duality of light. With the design of the micro-patterns and a combination of grating plate, the authenticity of products can be defined and the brand logo of the products can be protected.

Specifically, the film layer 5 may be a soft material for package and decoration, such as a casting polypropylene (CPP) and a polyvinyl chloride (PVC) layer, or may be a hard material such as a polyester (PET) layer, and a thickness of the film layer 5 is 40 µm to 160 µm.

The base coat layer 6 is made from an aqueous solution of polyethyleneimine, ethylene-acrylic acid copolymer or polymer polyester, and has a dry weight of 0.07 g/m² and a thickness of 0.02 µm to 0.04 µm.

The hot melt adhesive layer 7 includes one or more of ethylene-vinyl acetate (EVA) copolymer, ethylene-methyl acrylate (EMA) copolymer and ethylene-acrylic acid (EAA) copolymer. The hot melt adhesive layer 7 may be adhered to paper, plank, plastic board and aluminium-plastic panel and then covers them.

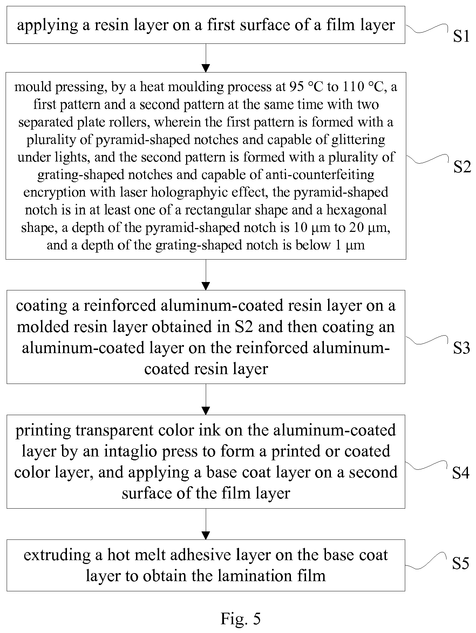

In another aspect, the present disclosure provides in embodiments a method for preparing above lamination film, as shown in Fig. 5, the method includes the following steps.

S1: applying a resin layer on a first surface of a film layer 5;

S2: mould pressing, by a heat moulding process at 95 °C to 110 °C, a first pattern and a second pattern at the same time with two separate plate rollers, in which
the first pattern is formed with a plurality of pyramid-shaped notches and capable of glittering under lights, and
the second pattern is formed with a plurality of grating-shaped notches and capable of anti-counterfeiting encryption with laser holographic effect,
the pyramid-shaped notch is in at least one of a rectangular shape and a hexagonal shape,
a depth of the pyramid-shaped notch is 10 µm to 20 µm, and
a depth of the grating-shaped notch is below 1 µm;

S3: coating a reinforced aluminum-coated resin layer 3 on a molded resin layer 4 obtained in S2 and then coating an aluminum-coated layer 2 on the reinforced aluminum-coated resin layer 3;

S4: printing transparent color ink on the aluminum-coated layer 2 by an intaglio press to form a printed or coated color layer 1;

S5: applying a base coat layer 6 on a second surface of the film layer 5; and

S6: extruding a hot melt adhesive layer 7 on the base coat layer 6 to obtain the lamination film.

Specifically, the hot melt adhesive layer 7 having a thickness of 10 µm to 50 µm is formed on the base coat layer by a composite-extruder machine, which further includes:
feeding hot melt pellets dried in advance, having a melt index MI of 15 g/10min (190 °C, 2.16 kg) and a melting point of 85 °C, into an extruder;
extruding and casting under a melting temperature of 215 °C to 230 °C on the base coat layer 6; and
combining the hot melt adhesive layer 7 with the base coat layer 6 by a cooling roller and a pressing roller to obtain the lamination film.

In some embodiments, the method further includes a step of providing an anti-counterfeiting code in the molded resin layer, wherein the anti-counterfeiting code is formed by heat moulding process, and wherein the anti-counterfeiting code is manufactured in the first pattern and presented as a character with laser holography having a depth of 0.1 mm or less, thereby achieving laser holography

In some embodiments, the molded resin layer is further combined with a synthetic grating for anti-counterfeiting, wherein the synthetic grating is a 20×30 mm² transparent laser holographic grating plate and is used as a security key.

In particular, in embodiments of the present disclosure, patterns are formed by a laser engraving plate roller; and a nickel plate is copied by an electroforming machine; and such processes can be achieved in one device. The lamination film prepared by processes such as coating a reinforced aluminum-coated resin layer 3 and extruding a hot melt adhesive layer 7 is a new packaging and anti-counterfeiting product combining many technical processes.

There is no other additive in the production and processing process of the present disclosure, and thus the pollution is lower compared to traditional methods. In addition, since the lamination film contains a plurality of layers with much fewer pinholes, a better permeability resistance against corrosive medium, compared with traditional printing method, i.e., coating method, can be achieved. Moreover, a metal surface process of stainless steel plate or other metal plate used may be omitted, thus saving production cost.

### Example 1

A lamination film with a structure of printed ink layer/aluminum-coated layer/reinforced aluminum-coated resin layer/molded resin layer/CPP film layer/base coat layer/hot melt adhesive layer was prepared as following steps:
Step 1: applying a resin layer on a first surface of a film layer 5;
Step 2: mould pressing, by a heat moulding process at 95 °C to 110 °C, a first pattern and a second pattern at the same time with separated plate roller, in which
   the first pattern is formed with a plurality of pyramid-shaped notches and capable of glittering under lights, and
   the second pattern is formed with a plurality of grating-shaped notches and capable of anti-counterfeiting encryption with laser holographic effect,
   the pyramid-shaped notch is in at least one of a rectangular shape and a hexagonal shape,
   a depth of the pyramid-shaped notch is 10 µm to 20 µm, and
   a depth of the grating-shaped notch is below 1 µm;
Step 3: coating a reinforced aluminum-coated resin layer 3 on a molded resin layer 4 obtained in S2 and then coating an aluminum layer 2 by vacuum evaporation;
Step 4: printing transparent color ink on the aluminum-coated layer 2 by an intaglio press to form a printed or coated color layer 1;
Step 5: applying a base coat layer 6 on a second surface of the film layer 5; and
Step 6: extruding a hot melt adhesive layer 7 on the base coat layer 6 to obtain the lamination film.

A thickness of the CPP film layer in the step 1 is 100 µm and a width thereof is 1250 mm. A steel roller used for heat moulding process was prepared by controlling laser to notch the steel roller. In particularly, surface of the steel roller is not printed with ink to have a pattern with a matte plating effect due to different triangle surface number for refraction and reflection of pyramid-shaped notches 8 being in at least one of a rectangular shape and a hexagonal shape.

A heat moulding process was used to at 95 °C to 110 °C to produce rectangular-shaped notches or hexagonal-shaped notches 8 on the resin layer (as shown in Fig. 2), so as to achieve an image with imitated metal glittering effect during refraction and reflection. There is no optical holographic rainbow effect caused by the heat moulding process, and the colour and the effect achieved during refraction and reflection of the image is the same with a metal surface processed mechanically.

During the heat moulding process, two separate rollers of one device were operated at the same time (shown in Fig. 2) (a depth of the grating-shaped notch 9 is below 0.1 mm), and anti-counterfeiting micro image was further formed. In a 40× magnifying glass or reading microscope, a micro image such as number 8971 or 0777 and patterns formed by dot arrangements in the hexagonal pyramids or quadrangular pyramids can be seen clearly.

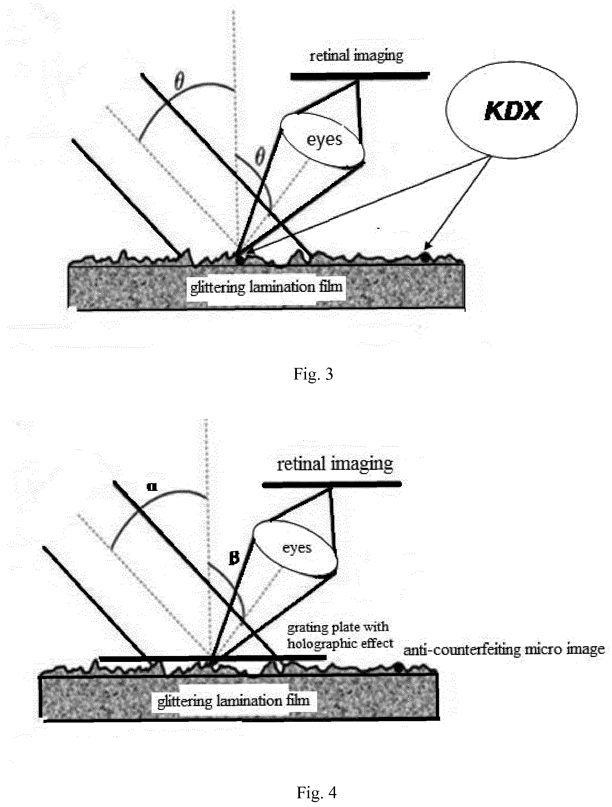

In the glittering patterns, a pattern with a grating was formed shown in Figs. 3 and 4. Specifically, a 20×30 mm² transparent laser holographic grating plate is used as a security key and the lamination film is used as a security lock. When the lamination film is combined with the grating plate, a micro image, which is commonly invisible, will occur, such as "KDX".

Regarding the reinforced aluminum-coated resin layer 3 and the aluminum-coated layer 2, the reinforced aluminum-coated resin layer 3 contains an acrylic acid resin.

An aqueous base coat layer 6 was used and was made by drying from an aqueous solution of polyethyleneimine. A common dry weight for coating is 0.02 g/m² to 0.07 g/m² and a solid content is 0.7% to 5.5%. In an embodiment of the present disclosure, the base coat layer 6 has a dry weight of 0.07 g/m² and a thickness of 0.02 µm.

Preparation of hot melt adhesive layer: EVA hot melt adhesive layer having a thickness of 15 µm was formed by a composite-extruder machine, which further comprises: feeding EVA hot melt pellets dried in advance and having a melt index MI of 15 g/10min (190 °C, 2.16 kg) and a melting point of 85 °C into an extruder; extruding and casting under a melting temperature of 215 °C to 230 °C on the base coat layer; and combining with the base coat layer by a cooling roller and a pressing roller to form an adhesive layer. Specifically, a release force of the adhesive layer is more than 0.7 N/15mm. After being cut and deburred, a total thickness of the obtained lamination film is 115.8 µm.

### Example 2

A lamination film with a structure of printed ink layer/aluminum-coated layer/reinforced aluminum-coated resin layer/molded resin layer/PVC film layer/base coat layer/hot melt adhesive layer

A thickness of the PVC film layer is 150 µm and a width thereof is 1250 mm. The process of Example 2 is similar with Example 1, that is, a printed ink layer 1 + aluminum-coated layer 2 + reinforced aluminum-coated resin layer 3 + molded resin layer 4 + PVC film layer 5 + base coat layer 6 + hot melt adhesive layer 7. The only difference is that after completion of steps 1-5 of Example 1, UV ink layer gravure printing was performed.

A steel roller used for heat moulding process was prepared by controlling laser to notch the steel roller. In particularly, surface of the steel roller is not printed with ink to have a pattern with a matte plating effect due to different triangle surface number for refraction and reflection of pyramid-shaped notches 8 being in at least one of a rectangular shape and a hexagonal shape.

The thermoplastic metal material layer of the lamination film with imitated mater effect of the present disclosure may be adhered to paper, plank, plastic board, aluminium-plastic panel and steel plate in the hot-pressed molten state and then covers them. There is no other additives during the preparation process of the present disclosure, thus less pollution is caused by the present method compared with the existing methods.

A composite film refers to both heat melt adhesive layer 7 and PVC film layer. Since the composite film is prepared by adding the heat melt adhesive, fewer pinholes are formed.

The composite film is a layer of plastic film at room temperature, as described above, a barrier layer is formed additionally compared with traditional printing methods. According to the method of the present disclosure, a water vapor permeability is ≤ 10 (g/m².24h), an oxygen permeability is ≤ 120 (cm³/m².24h.0.1MPa). However, when the traditional printing method is used, the water vapor permeability is ≤15 (g/m².24h), an oxygen permeability is ≤ 1800 (cm³/m².24h.0.1Mpa). Therefore, a better permeability resistance against corrosive medium, compared with traditional printing method, i.e., coating method, can be achieved.

In particular, products of lamination film with imitated metal patterns may replace steel sheets or other metal sheets with a metal surface effect processed mechanically, thus saving production cost.

Although explanatory embodiments have been shown and described, it would be appreciated by those skilled in the art that the above embodiments cannot be construed to limit the present disclosure, and changes, amendments, alternatives, and modifications can be made in the embodiments without departing from spirit, principles and scope of the present disclosure.

## Claims

1. A lamination film, comprising a printed or coated color layer, an aluminum-coated layer, a reinforced aluminum-coated resin layer, a molded resin layer, a film layer, a base coat layer and a hot melt adhesive layer which are sequentially arranged, wherein
the molded resin layer is provided with a first pattern formed with a plurality of pyramid-shaped notches and capable of glittering under lights and a second pattern formed with a plurality of grating-shaped notches and capable of anti-counterfeiting encryption with laser holography
the pyramid-shaped notch is in at least one of a rectangular shape and a hexagonal shape,
a depth of the pyramid-shaped notch is 10 µm to 20 µm,
a depth of the grating-shaped notch is below 1 µm.

2. The lamination film according to claim 1, wherein the film layer is a casting polypropylene, polyvinyl chloride or polyester film layer, and a thickness of the film layer is 40 µm to 160 µm.

3. The lamination film according to claim 1 or 2, wherein the hot melt adhesive layer comprises one or more of ethylene-vinyl acetate (EVA) copolymer, ethylene-methyl acrylate (EMA) copolymer and ethylene-acrylic acid (EAA) copolymer.

4. The lamination film according to any one of claims 1 to 3, wherein the base coat layer is made from an aqueous solution of polyethyleneimine, ethylene-acrylic acid copolymer or polymer polyester, and has a dry weight of 0.07 g/m² and a thickness of 0.02 µm to 0.04 µm.

5. The lamination film according to any one of claims 1 to 4, wherein the printed or coated color layer has a dry weight of 0.02 g/m² to 0.07 g/m² and a solid content of 0.7% to 5.5%.

6. A method for preparing a lamination film, comprising:
S 1: applying a resin layer on a first surface of a film layer;
S2: mould pressing, by a heat moulding process at 95 °C to 110 °C, a first pattern and a second pattern at the same time with two separate plate rollers, wherein
the first pattern is formed with a plurality of pyramid-shaped notches and capable of glittering under lights, and
the second pattern is formed with a plurality of grating-shaped notches and capable of anti-counterfeiting encryption with laser holography,
the pyramid-shaped notch is in at least one of a rectangular shape and a hexagonal shape,
a depth of the pyramid-shaped notch is 10 µm to 20 µm, and
a depth of the grating-shaped notch is below 1 µm;
S3: coating a reinforced aluminum-coated resin layer on a molded resin layer obtained in S2 and then coating an aluminum-coated layer on the reinforced aluminum-coated resin layer;
S4: printing transparent color ink on the aluminum-coated layer by an intaglio press to form a printed or coated color layer;
S5: applying a base coat layer on a second surface of the film layer; and
S6: extruding a hot melt adhesive layer on the base coat layer to obtain the lamination film.

7. The method according to claim 6, wherein the reinforced aluminum-coated resin layer comprises an acrylic acid resin.

8. The method according to claim 6 or 7, wherein the hot melt adhesive layer having a thickness of 10 µm to 50 µm is formed on the base coat layer by a composite-extruder machine, which further comprises:
feeding hot melt pellets dried in advance, having a melt index MI of 15 g/10min (190 °C, 2.16 kg) and a melting point of 85 °C, into an extruder;
extruding and casting under a melting temperature of 215 °C to 230 °C on the base coat layer; and
combining the hot melt adhesive layer with the base coat layer by a cooling roller and a pressing roller to obtain the lamination film.

9. The method according to any one of claims 6 to 8, wherein further comprising a step of providing an anti-counterfeiting code in the molded resin layer,
wherein the anti-counterfeiting code is formed by heat moulding process, and
wherein the anti-counterfeiting code is manufactured in the first pattern and presented as a character with laser holography having a depth of 0.1 mm or less, thereby achieving laser holography.

10. The method according to any one of claims 6 to 9, wherein the molded resin layer is further combined with a synthetic grating for anti-counterfeiting, wherein the synthetic grating is a 20×30 mm² transparent laser holographic grating plate and is used as a security key.

11. The method according to any one of claims 6 to 10, wherein the film layer is a casting polypropylene, polyvinyl chloride or polyester film layer, and a thickness of the film layer is 40 µm to 160 µm.

12. The method according to any one of claims 6 to 11, wherein the hot melt adhesive layer comprises one or more of ethylene-vinyl acetate (EVA) copolymer, ethylene-methyl acrylate (EMA) copolymer and ethylene-acrylic acid (EAA) copolymer.

13. The method according to any one of claims 6 to 12, wherein the base coat layer is made from an aqueous solution of polyethyleneimine, ethylene-acrylic acid copolymer or polymer polyester, and has a dry weight of 0.07 g/m² and a thickness of 0.02 µm to 0.04 µm.

14. The method according to any one of claims 6 to 13, wherein the printed or coated color layer has a dry weight of 0.02 g/m² to 0.07 g/m² and a solid content of 0.7% to 5.5%.
